Europäisches Patentamt

European Patent Office

Office européen des brevets

(19)

(11) Veröffentlichungsnummer: **0 061 678**
**B1**

(12) **EUROPÄISCHE PATENTSCHRIFT**

(45) Veröffentlichungstag der Patentschrift:
10.10.84

(51) Int. Cl.³: **C 08 G  63/12,** C 09 D  11/10

(21) Anmeldenummer: **82102312.4**

(22) Anmeldetag: **20.03.82**

(54) **Verfahren zur Herstellung wasser- und spritlöslicher Druckfarbenbindemittel und deren Verwendung.**

(30) Priorität: **27.03.81  DE 3112162**

(43) Veröffentlichungstag der Anmeldung:
**06.10.82 Patentblatt 82/40**

(45) Bekanntmachung des Hinweises auf die Patenterteilung:
**10.10.84 Patentblatt 84/41**

(84) Benannte Vertragsstaaten:
**BE CH DE FR GB IT LI NL SE**

(56) Entgegenhaltungen:
**CH - A - 219 940**
**DE - A - 2 005 044**
**DE - A - 2 743 617**
**DE - C - 501 955**

(73) Patentinhaber: **BASF Aktiengesellschaft,
Carl-Bosch-Strasse 38, D-6700 Ludwigshafen (DE)**

(72) Erfinder: **Hoene, Richard, Dr., Goerresstrasse 27,
D-6900 Heidelberg (DE)**

**Beschreibung**

Die vorliegende Erfindung betrifft ein Verfahren zur Herstellung wasser- und spritlöslicher Druckfarbenbindemittel auf Basis von Phthalsäurepolyestern und deren Verwendung in wasser-, sprit- oder esterlöslichen Flexo- oder Tiefdruckfarben.

Aus Gründen der leichteren Handhabung und der Umweltverträglichkeit gewinnen wasserlösliche Druckfarben zunehmend an Interesse. Derartige Produkte werden vielfach beim Bedrucken von Verpackungsmaterialien nach dem Verfahren des Tief- und des Flexodrucks eingesetzt, wo außerdem sprit- und esterlösliche Farben, z. B. auf Basis von Nitrocellulose verwendet werden. Man sucht daher nach Harzen, welche in allen diesen Medien einsetzbar sind. Während Nitrocellulose in wäßrigen Alkalien nicht löslich ist, sind die sogenannten Maleinatharze (Kondensationsprodukte aus Maleinsäureanhydrid-modifiziertem Kolophonium mit Polyolen) mit den genannten Lösemitteln verträglich. Ein erheblicher Nachteil dieser Produkte besteht in ihrer dunkelbraunen Färbung. Die für Druckfarben angebotenen wasserverdünnbaren Polyacrylatharze besitzen vergleichbare Löslichkeit und den Vorteil der Farblosigkeit; diese sind aber hinsichtlich Erweichungs- und Trocknungsverhalten sowie Geruch benachteiligt. Schellack, ein früher viel verwendetes Naturprodukt, wird aufgrund seines hohen Preises heute kaum mehr für diese Zwecke verwendet. Es ist bekannt, auf Basis von Phthalsäureanhydrid und Triolen, z. B. Hexantriol oder Trimethylolpropan, gesättigte Polyester herzustellen, welche in wäßrigen Alkalien löslich und z. B. mit Ethanol verträglich sind und sich daher für die genannte Anwendung in Druckfarben eignen. Dem steht jedoch die schlechte Verfügbarkeit bzw. steigende Preise für diese Rohstoffe entgegen.

Aufgabe der vorliegenden Erfindung ist es, ein hinsichtlich der Kosten optimales, hinsichtlich des Eigenschaftsbildes mindestens vergleichbares vorteilhaftes Verfahren zur Herstellung wasser- und spritlöslicher Druckfarbenbindemittel auf Basis von Phthalsäurepolyestern aufzuzeigen.

Gegenstand der vorliegenden Erfindung ist ein Verfahren zur Herstellung wasser- und spritlöslicher Druckfarbenbindemittel auf Basis von Phthalsäurepolyestern, das dadurch gekennzeichnet ist, daß

(A) 55 bis 65 Gew.-% Phthalsäureanhydrid oder eines Gemisches aus Phthalsäureanhydrid und einer Di- oder Polycarbonsäure, deren Ester oder Anhydrid, wobei das Gemisch mindestens 90 Gew.-% Phthalsäureanhydrid enthält, und

(B) 35 bis 45 Gew.-% eines Gemisches aus 33 bis 67 Gew.-% Neopentylglykol und 67 bis 33 Gew.-% Pentaerythrit, wobei bis zu 15 Gew.-% des Gemisches durch andere Polyolkomponenten ersetzt sein können,

mit der Maßgabe, daß die Summe der unter (A) und (B) genannten Prozentzahlen gleich 100 ist, zu einem Polyester mit einer Säurezahl von 80 bis 120 und einem Erweichungspunkt von mindestens 75°C kondensiert werden.

Besonders bevorzugt ist ein Zweistufenverfahren, wobei die Komponente (A) zunächst mit Neopentylglykol und anschließend mit Pentaerythrit umgesetzt wird.

Gegenstand der vorliegenden Erfindung ist außerdem die Verwendung der erfindungsgemäß hergestellten Druckfarbenbindemittel in wasser-, sprit- oder esterlöslichen Flexo- oder Tiefdruckfarben.

Die erfindungsgemäß herstellbaren Druckfarbenbindemittel zeichnen sich durch Farblosigkeit, gutes Lösungsverhalten, Verträglichkeit und hervorragende Druckeigenschaften aus.

Zu den Aufbaukomponenten für die Herstellung der Druckfarbenbindemittel ist im einzelnen folgendes auszuführen.

(A) Als Komponente (A) kommen Phthalsäureanhydrid oder dessen Gemische mit untergeordneten Mengen von bis zu 10 Gew.-% an Di- oder Polycarbonsäuren, wie z. B. Phthalsäure, Tetrahydro-, Hexahydrophthalsäure, Maleinsäure, Fumarsäure, Azelainsäure, Adipinsäure, Sebacinsäure, Isophthalsäure, Trimellithsäure, Pyromellithsäure, Dimerfettsäuren, anderen Säureanhydriden, wie z. B. Maleinsäureanhydrid, Tetrahydro-, Hexahydro-, Endomethylentetrahydrophthalsäureanhydrid, Trimellithsäure-, Pyromellithsäureanhydrid oder Estern von Dicarbonsäuren, wie z. B. Phthalsäuredimethylester in Betracht. Steigender Säureanteil verbessert Erweichungspunkt und Wasserlöslichkeit, vermindert aber die Ethanolverträglichkeit. Mit sinkendem PSA-Anteil fällt der Erweichungspunkt und die Verträglichkeit mit Nitrocellulose ab, während die Viskosität der ethanolischen Lösungen steigt. Erfindungsgemäß wird die Komponente (A) daher in einem Anteil von 55—65 Gew.-% verwendet. Die Verwendung von 0—10 Gew.-% Maleinsäureanhydrid in (A) bringt gelegentlich Vorteile bezüglich der Farbstabilität der Harze mit sich.

(B) Komponente (B) besteht erfindungsgemäß aus 33 bis 67 Gew.-% Neopentylglykol und 33—67 Gew.-% Pentaerythrit, wobei bis zu 15 Gew.-% des Gemisches durch andere Polyolkomponenten ersetzt sein können. Aus Kostengründen könnte die Verwendung eines möglichst großen Anteils von Pentaerythrit angebracht sein. Es ist aber nicht sinnvoll, den Anteil größer als 2/3 oder kleiner als 1/3 zu wählen: Mit mehr als 67 Gew.-% Pentaerythrit in (B) fällt die Verträglichkeit mit Nitrocellulose bzw. die Löslichkeit in Ethanol drastisch ab und erhöht sich das Risiko, zu vernetzten Produkten zu gelangen, in unzumutbarer Weise. Mehr als 67 Gew.-% Neopentylglykol dagegen führen zu Produkten mit Erweichungspunkten von unter 75°C. Andere Polyolkomponenten, durch die bis zu 15 Gew.-% des Gemisches (B) ersetzt sein können, sind z. B. 2- bis 6wertige Polyole mit 2 bis 20 Kohlenstoffatomen, wie Ethylen-, Propylen-, Butylen-, Hexylenglykole, Pentandiole, Dimethylolcyclohexan, Di-, Triethylenglykol, Glyzerin, Trimethylolethan, -propan, -butan, 1,2,6-Hexantriol, Sorbit sowie Dipentaerythrit, welches häufig in Anteilen bis 20 Gew.-% als Verunreinigung des Pentaerythrits vorkommt.

Auch innerhalb der angegebenen Mengengrenzen ist es erforderlich, die Harze bis zu Säurezahlen von 80—120 und Erweichungspunkten von mindestens 75°C zu kondensieren, um für Druckfarben geeignete Produkte zu erhalten. Eine wichtige Eigenschaft ist außerdem die Lösungsviskosität, welche bei den erfindungsgemäß hergestellten Harzen in wäßrigem Ammoniak bzw. Ethanol bestimmt wird. Die Auslaufzeiten, gemessen bei 23°C im DIN-4-Becher, betragen im allgemeinen bei der 23%igen Lösung in 5%igem Ammoniak 10—30 Sekunden, bei der 60%igen Lösung in Ethanol 20—200 Sekunden. Durch die Höhe der Säurezahl werden wichtige Anwendungseigenschaften, z. B. die Naßfestigkeit der Drucke, stark beeinflußt. Hohe Säurezahlen z. B. über 120, vermindern die Naßfestigkeit. Niedere Säurezahlen, z. B. kleiner als 80, bedeuten ein höheres Molekulargewicht und damit höhere Viskosität der Harze. Niedrige Viskositäten, z. B. 20—50 DIN 4-Sekunden der Druckfarbe, sind insbesondere für den Flexo- und Tiefdruck erforderlich.

Die Herstellung der Polyester geschieht nach den üblichen Verfahren unter Abtrennung des Kondensationswassers, ggf. mit Hilfe von Schleppmitteln, wie z. B. Benzine, Aromaten oder chlorierte Kohlenwasserstoffe oder Anwendung von Unterdruck, bei Temperaturen zwischen 150 und 200°C.

Die Reaktionszeiten betragen gewöhnlich einige Stunden. Ein übermäßig beschleunigter Reaktionsverlauf ist oft nicht angebracht, weil sich das Produkt während des Austrags nicht weiter verändern soll. Es ist auch möglich, die Polykondensation kontinuierlich, z. B. in einer Rührkesselkaskade, durchzuführen.

Die erfindungsgemäß hergestellten Harze sind farblos, klar, geruchfrei und unbegrenzt lagerstabil.

Zur Herstellung von Harzen, die in verdünnten Alkalien völlig klare Lösungen ergeben, wird bevorzugt ein Verfahren angewendet, bei welchem die Polykondensation in 2 Stufen verläuft. Hier wird zunächst Komponente (A) mit Neopentylglycol, z. B. unter der Bildung der Halbester umgesetzt. Nach Ablauf eines wesentlichen Teils dieser Umsetzung, welche bei 80—200°C durchgeführt werden kann, wird die Polykondensationsreaktion unter Zusatz des restlichen Pentaerythrits zu Ende geführt. Verfährt man dagegen z. B. derart, daß man in einem einstufigen Prozeß das Gemisch aus (A) und (B) aufheizt und verestert, enthält das Produkt häufig Anteile, welche in wäßrigem Alkali als ein weißer Niederschlag ausfallen, der im wesentlichen aus einem cyclischen oligomeren Ester von Phthalsäure und Neopentylglycol besteht. Die nach dem Zweistufenverfahren hergestellten Harze sind, da sie mit Alkalien wasserlösliche Harzseifen bilden, besonders zur Herstellung wäßriger Flexo- und Tiefdruckfarben geeignet. Sie können auch in anderen Beschichtungsmassen, z. B. Lacken, ggf. in Gegenwart von Melaminharzen verwendet werden, wobei ihre guten Pigmentbenetzungseigenschaften von Vorteil sind. Die Harze eignen sich weiter für wasserwaschbare Slotterfarben und für Transferdruck. Aufgrund ihrer Verträglichkeit mit Nitrocellulose, Polyvinylacetat, Ketonharzen und vielen Aldehydharzen vermögen sie diese Bindemittel in vielen Formulierungen zumindest teilweise zu ersetzen. Da sie ebenfalls in Glycolen löslich sind, können sie außerdem in moisture set-Druckfarben oder Kugelschreibpasten eingesetzt werden.

Die Farbzahl (FZ) der erfindungsgemäß hergestellten Harze, gemessen an der 50%igen Lösung in Ethanol nach DIN 6162, beträgt im allgemeinen 3—15.

Die in den folgenden Beispielen angeführten Prozentangaben beziehen sich auf das Gewicht.

Die Bestimmung der Erweichungspunkte (EP) erfolgt nach dem Verfahren von Krämer—Sarnow—Nagel. Die Farbzahl (FZ) wird 50%ig in Ethanol nach DIN 6162 gemessen; die Säurezahl (SZ) wird nach DIN 53 402 bestimmt.

## Beispiel 1

In einem Rührbehälter mit Stickstoff-Einleitung und Destillationsvorrichtung werden 58 Teile Phthalsäureanhydrid (PSA), 2 Teile Maleinsäureanhydrid (MSA) und 14 Teile Neopentylglycol (NPG) vorgelegt und 1 Stunde bei 100°C gerührt. Nun fügt man zu der homogenen Schmelze 26 Teile Pentaerythrit (PE) zu, erhitzt in 2 Stunden auf 170°C und führt die Polykondensation mehrere Stunden unter Auffangen des freigesetzten Wassers so lange weiter, bis der Ansatz eine Säurezahl von 90 aufweist. Das erhaltene Produkt wird ausgetragen und geprüft.

## Beispiele 2—8

Man verfährt wie bei Beispiel 1 unter Variation der Einsatzstoffe und der Säurezahlen.
Die Kennzahlen sind in der folgenden Tabelle 1 festgehalten.

0 061 678

Als Viskosität der Lösung in 5%igem wäßrigem $NH_4OH$ gilt die Auslaufzeit der 23%igen Harzlösung, gemessen bei 23°C im DIN-4-Becher nach DIN 53 211. Als Viskosität in Ethanol gilt die Auslaufzeit der 60%igen Harzlösung, nach der gleichen Methode gemessen.

| Beispiel Nr. | Einsatzmenge (%) | | | | SZ | Viskosität in | | FZ | EP (°C) |
| | PSA | MSA | NPG | PE | | 5% $NH_4OH$ | Ethanol | | |
|---|---|---|---|---|---|---|---|---|---|
| 1 | 58 | 2 | 14 | 26 | 90 | 13,9 | 145,0 | 4 | 85 |
| 2 | 58 | 2 | 14 | 26 | 99 | 11,7 | 109,3 | 4 | 83 |
| 3 | 58 | 2 | 26 | 14 | 103 | 12,6 | 60,0 | 4 | 80 |
| 4 | 56 | — | 15 | 29 | 95 | 11,2 | 50,7 | 5 | 77 |
| 5 | 65 | — | 18 | 17 | 120 | 14,1 | 175,2 | 14 | 89 |
| 6 | 60 | — | 26 | 14 | 98 | 21,2 | 34,8 | 7 | 78 |
| 7 | 59,5 | 0,5 | 15 | 25 | 85 | 30,0 | 199,1 | 4 | 91 |
| 8 | 62 | 2 | 18 | 18 | 120 | 13,6 | 146,9 | 4 | 85 |

## Drucktechnische Prüfung

Eine Mischung aus

10 Teilen $\beta$-Kupfer-Phthalocyanin und
90 Teilen Bindemittellösung (pH = 9,0) aus
    25 Teilen Harz
     3 Teilen conz. $NH_4OH$
    22 Teilen n-Propanol und
    50 Teilen Wasser

wird in einer Kugelmühle angerieben. Die mit den nach den Beispielen 1—8 hergestellten Harzen erhaltenen Druckfarben weisen keinen unangenehmen Geruch auf. Sie ergeben einwandfreie Drucke mit hohem Glanz und sehr guter Farbtonreinheit. Auch nach dreitägiger Lagerung bei 50°C wird kein Absetzen und kein Verdicken der Farben festgestellt.

Die Naßfestigkeit der Druckfarben wird folgendermaßen geprüft: Mit einer Rakel wird die Farbe auf einen saugfähigen Papierstreifen in einer Schichtdicke von 10 μm aufgetragen. Der beschichtete Streifen wird 24 Stunden bei 23°C und einer relativen Luftfeuchtigkeit von 65% gelagert. Zur Prüfung wird ein Streifen aus feuchtem Zellstoff-Vlies, der mit einem Gewicht von 860 g beschwert ist, dreimal über die beschichtete Seite des Papierstreifens gezogen. Bei den erfindungsgemäßen Druckfarben wird keine oder höchstens eine sehr geringe Farbübertragung auf dem Vliesstreifen beobachtet.

## Patentansprüche

1. Verfahren zur Herstellung wasser- und spritlöslicher Druckfarbenbindemittel auf Basis von Phthalsäurepolyestern, dadurch gekennzeichnet, daß

(A) 55 bis 65 Gew.-% Phthalsäureanhydrid oder eines Gemisches aus Phthalsäureanhydrid und einer Di- oder Polycarbonsäure, deren Ester oder Anhydrid, wobei das Gemisch mindestens 90 Gew.-% Phthalsäureanhydrid enthält, und
(B) 35 bis 45 Gew.-% eines Gemisches aus
    33 bis 67 Gew.-% Neopentylglykol und
    67 bis 33 Gew.-% Pentaerythrit,
    wobei bis zu 15 Gew.-% des Gemisches durch andere Polyolkomponenten ersetzt sein können,

mit der Maßgabe, daß die Summe der unter (A) und (B) genannten Prozentzahlen gleich 100 ist, zu einem Polyester mit einer Säurezahl von 80 bis 120 und einem Erweichungspunkt von mindestens 75°C kondensiert werden.

2. Verfahren nach Anspruch 1, dadurch gekennzeichnet, daß die Komponente (A) zunächst mit

4

**0 061 678**

Neopentylglykol und anschließend mit Pentaerythrit umgesetzt wird.

3. Verwendung der nach einem Verfahren gemäß Anspruch 1 oder 2 hergestellten Druckfarbenbindemittel in wasser-, sprit- oder esterlöslichen Flexo- oder Tiefdruckfarben.

## Claims

1. A process for the preparation of water- and spirit-soluble printing ink binders based on phthalic acid polyester, wherein

(A) 55 to 65% by weight of phthalic anhydride or a mixture of phthalic anhydride and a dicarboxylic or polycarboxylic acid or an ester or anhydride thereof, the mixture containing at least 90% by weight of phthalic anhydride, and

(B) 35 to 45% by weight of a mixture of
33 to 67% by weight of neopentyl glycol and
67 to 33% by weight of pentaerythritol,
it being possible for up to 15% by weight of the mixture to be replaced by other polyol components,

with the proviso that the sum of the percentages specified under (A) and (B) is 100, are condensed to form a polyester having an acid number of 80 to 120 and a softening point of at least 75° C.

2. A process as claimed in claim 1, wherein component (A) is reacted first with neopentyl glycol and then with pentaerythritol.

3. The use of a printing ink binder prepared by a process as claimed in claim 1 or 2 in water-, spirit- or ester-soluble flexographic or intaglio printing inks.

## Revendications

1. Procédé de préparation de liants pour encres d'impression, solubles dans l'eau et l'alcool, à base de polyesters d'acide phtalique, caractérisé par le fait que l'on condense en un polyester d'un indice d'acide de 80 à 120 et d'un point de ramollissement d'au moins 75° C,

(A) 55 à 65% en poids d'anhydride phtalique ou d'un mélange d'anhydride phtalique et d'un acide di- ou polycarboxylique, son ester ou anhydride, le mélange contenant au moins 90% en poids d'anhydride phtalique, et

(B) 35 à 45% en poids d'un mélange de 33 à 67% en poids
33 à 67% en poids de néopentylglycol et
67 à 33% en poids de pentaérythrite,
jusqu'à 15% en poids du mélange pouvant être remplacés par d'autres composants de polyols,

sous réserve que la somme des pourcentages indiqués sous (A) et (B) soit égale à 100.

2. Procédé selon la revendication 1, caractérisé en ce que l'on fait réagir le composant (A), tout d'abord, avec du néopentylglycol et ensuite avec de la pentaérythrite.

3. Utilisation des liants pour encres d'impression obtenus par un procédé selon la revendication 1 ou 2, dans des encres flexographiques ou hélio.